# EUROPÄISCHE PATENTSCHRIFT

(11) **EP 3 118 091 B1**
(45) Veröffentlichungstag und Bekanntmachung des Hinweises auf die Patenterteilung: **07.08.2019**
(21) Anmeldenummer: 16001437.9
(22) Anmeldetag: 27.06.2016
(51) Int. Cl.: B62D 35/00, B60K 11/02, B60K 11/04, B60K 11/08, B60K 15/063

(54) **KRAFTFAHRZEUG, VORZUGSWEISE KOFFER-LASTKRAFTWAGEN MIT MOTOR- UND/ODER AGGREGATSKÜHLEINRICHTUNG**
MOTOR VEHICLE, PREFERABLY BOX TRUCKS WITH MOTOR AND/OR AGGREGATE COOLING
VEHICULE AUTOMOBILE, DE PREFERENCE POIDS LOURDS COMPRENANT UN DISPOSITIF DE REFROIDISSEMENT D'AGREGAT ET/OU DE MOTEUR

(30) Priorität: 17.07.2015 DE 102015009364
(43) Veröffentlichungstag der Anmeldung: 18.01.2017
(73) Patentinhaber: MAN Truck & Bus SE, 80995 München (DE)
(72) Erfinder: Gutzeit, Reinhard, 82049 Pullach (DE)
(74) Vertreter: v. Bezold & Partner Patentanwälte - PartG mbB

(56) Entgegenhaltungen:
- WO-A1-2009/134186
- DE-A1- 1 580 120
- DE-A1-102005 033 331
- DE-A1-102007 050 191
- DE-A1-102011 109 025
- DE-A1-102013 007 464
- JP-A- 2004 140 881
- US-A1- 2005 217 908
- US-A1- 2014 021 711

## Beschreibung

Die Erfindung betrifft ein Kraftfahrzeug, nämlich einen Lastkraftwagen, insbesondere einen Koffer-Lastkraftwagen mit einem Fahrerhaus und einem Fahrzeugrahmen, insbesondere Fahrzeug-Chassis, zur rahmenfesten, unlösbaren Montage oder rahmenfesten, lösbaren Montage eines Kofferaufbaus.

Zum allgemeinen Stand der Technik können zunächst die JP 2004 140881 A und die DE 10 2011 109025 A1 genannt werden, die gattungsbildend sind. US 2005/217908 A1 beschreibt ein Wohnmobil, wobei DE 15 80 120 A1 einen Omnibus mit Heckmotor beschreibt.

Aus der DE 10 2013 007 464 A1 ist eine Sattelzugmaschine mit einem Fahrerhaus bekannt. Die Frontseite (Fahrzeugfront) des Fahrerhauses ist konstruktiv so geschlossenflächig ausgeführt, dass sie keinen Lufteinlass für eine Motor- und/oder Aggregatkühleinrichtung aufweist. Vielmehr ist die Motor- und/oder Aggregatskühleinrichtung an der Rückseite des Fahrerhauses als Flächenkühler angeordnet. Im Gegensatz zu Sattelzugmaschinen ist bei einem Koffer-Lastkraftwagen der Freiraum zwischen Fahrerhaus-Rückseite und Kofferaufbau-Vorderseite zu klein, insbesondere um das Beladungsvolumen für den Kofferaufbau möglichst maximal auszugestalten, so dass dort kein Platz für eine Motor- und/oder Aggregatskühleinrichtung ist.

Eine Aufgabe der Erfindung ist es, einen Koffer-Lastkraftwagen zu schaffen, der sich trotz des Erfordernisses einer Motor- und/oder Aggregatskühlung zur Verwendung mit einer konstruktiv geschlossenflächig ausgeführten Fahrerhausfront eignet.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Kraftfahrzeug, nämlich einen Lastkraftwagen, insbesondere einen Koffer-Lastkraftwagen, mit einem Fahrerhaus und einem Fahrzeugrahmen, insbesondere Fahrzeug-Chassis, zur rahmenfesten, unlösbaren Montage oder zur rahmenfesten, lösbaren Montage eines Kofferaufbaus. Das Kraftfahrzeug zeichnet sich insbesondere dadurch aus, dass zumindest eine Motor- und/oder Aggregatskühleinrichtung fahrzeugrahmenseitig angeordnet ist, insbesondere seitlich außen am Fahrzeugrahmen, zweckmäßig seitlich außen an einem Längsträger des Fahrzeugrahmens oder zwischen zwei Längsträgern des Fahrzeugrahmens.

Der Koffer-Lastkraftwagen kann z. B. einen oder mehrere Anhänger aufweisen. Er kann ferner vorderster Lastkraftwagen eines beliebigen Lastkraftwagen-Gesamt-Zuges sein.

Das Fahrerhaus kann als, z. B. zur Motorwartung, abklappbares Fahrerhaus ausgebildet sein.

Die Fahrzeugfront, insbesondere die Front-Außenhaut, des Fahrerhauses ist konstruktiv so geschlossenflächig ausgeführt, dass sie keinen Lufteinlass zur Motor- und Aggregatskühlung aufweist. Die Fahrzeugfront des Fahrerhauses ist somit vorzugsweise so ausgeführt, dass eine Null-Durchströmung (Umströmung) durch selbige stattfindet. Natürlich kann im Rahmen der Erfindung z. B. unter und/oder neben der Fahrzeugfront des Fahrerhauses Luft, insbesondere Fahrtwind, zur fahrzeugrahmenseitigen Motor- und/oder Aggregatskühleinrichtung gelangen.

Die Fahrzeugfront ist vorzugsweise kühlergrillfrei, gleichmäßig und somit zweckmäßig aerodynamisch und/oder mit einer geometrischen Anpfeilung zur Luftwiderstandsverbesserung ausgebildet.

Die Motor- und/oder Aggregatskühleinrichtung ist zweckmäßig seitlich außen an einem Längsträger des Fahrzeugrahmens angeordnet und z. B. an den Längsträger oder allgemein den Fahrzeugrahmen montiert.

Es ist möglich, dass stromaufwärts der Motor- und/oder Aggregatskühleinrichtung ein Kühllufteinlasskasten angeordnet ist, über den z. B. mittelbar oder unmittelbar Luft zur Motor- und/oder Aggregatskühleinrichtung leitbar ist. Über den Kühllufteinlasskasten kann insbesondere Fahrtwind zur Motor- und/oder Aggregatskühleinrichtung geleitet und/oder Luft von einer Ventilatoreinrichtung zur Motor- und/oder Aggregatskühleinrichtung angesaugt werden.

Vorzugsweise ist ein Kühllufteinlass des Kühllufteinlasskastens kleiner als ein Kühlluftauslass des Kühllufteinlasskastens, so dass sich zweckmäßig ein Luftdurchlassquerschnitt des Kühllufteinlasskastens zumindest abschnittsweise zur Motor- und/oder Aggregatskühleinrichtung hin vergrößert. Alternativ kann ein Kühllufteinlass des Kühllufteinlasskastens größer als ein Kühlluftauslass des Kühllufteinlasskastens sein, so dass sich zweckmäßig ein Luftdurchlassquerschnitt des Kühllufteinlasskastens zumindest abschnittsweise zur Motor- und/oder Aggregatskühleinrichtung hin verjüngt.

Der Kühlluftauslass des Kühllufteinlasskastens kann sich zweckmäßig über die im Wesentlichen gesamte Breite und/oder Höhe des Kühllufteinlasses der Motor- und/oder Aggregatskühleinrichtung erstrecken.

Der Kühllufteinlass des Kühllufteinlasskastens ist zweckmäßig nach oben versetzt, so dass dadurch darunter Bauraum entsteht, z. B. für eine Abgaskomponente des Kraftfahrzeugs. Alternativ oder ergänzend kann der Kühllufteinlass des Kühllufteinlasskastens benachbart zu einem Vorderradkotflügel angeordnet sein, um vom Vorderradkotflügel vor Spritzwasser geschützt zu werden.

Der Kühllufteinlass des Kühllufteinlasskastens ist zweckmäßig einer Rückseite des Vorderradkotflügels zugewandt und/oder nur in einem hochgelegenen und daher zumindest im Wesentlichen spritzgeschützten Bereich des Fahrzeugrahmens ausgebildet.

Ebenfalls ist es möglich, dass der Kühllufteinlass des Kühllufteinlasskastens sich entlang einer Seitenwand des Fahrerhauses erstreckt, z. B. im Wesentlichen vertikal und/oder in einem hinteren Bereich des Fahrerhauses.

Innerhalb des Kühllufteinlasskastens können ein oder mehrere Luftleitelemente, z. B. Luftleitbleche, angeordnet sein, die zusätzlich zur Stabilität des Kühllufteinlasskastens beitragen.

Stromabwärts der Motor- und/oder Aggregatskühleinrichtung kann eine Ventilatoreinrichtung angeordnet sein, die insbesondere im Stand- oder Staubetrieb des Kraftfahrzeugs erwärmte Luft von der Motor- und/oder Aggregatskühleinrichtung wegbeaufschlagen, insbesondere absaugen kann. Alternativ oder ergänzend kann stromaufwärts der Motor- und/oder Aggregatskühleinrichtung eine Ventilatoreinrichtung angeordnet sein, die insbesondere im Stand- oder Staubetrieb des Kraftfahrzeugs die Motor- und/oder Aggregatskühleinrichtung mit Luft beaufschlagen kann, z. B. über den Kühllufteinlasskasten.

Die stromaufwärts der Motor- und/oder Aggregatskühleinrichtung angeordnete Ventilatoreinrichtung kann einen Luftdurchlass aufweisen, durch den hindurch die Motor- und/oder Aggregatskühleinrichtung mit Fahrtwind beaufschlagbar ist. Daraus ergibt sich, dass die stromaufwärts der Motor- und/oder Aggregatskühleinrichtung angeordneten Ventilatoreinrichtung vorzugsweise im Wesentlichen parallel zur Längsachse des Kraftfahrzeugs ausgerichtet sein kann.

Die stromaufwärts der Motor- und/oder Aggregatskühleinrichtung angeordnete Ventilatoreinrichtung umfasst vorzugsweise weniger als vier Ventilatorblätter, so dass möglichst viel Fahrtwind durch die Ventilatoreinrichtung hindurch zur Motor- und/oder Aggregatskühleinrichtung gelangen kann. Zu diesem Zweck können die Ventilatorblätter auch relativ schmal ausgebildet sein. Eine erforderliche Luftmenge bei Fahrzeugstillstand oder niedriger Fahrzeuggeschwindigkeit kann durch eine höhere Ventilatordrehzahl erreicht werden.

Es ist möglich, dass das Kraftfahrzeug einen Luftauslasskastenumfasst, um Luft mittelbar oder unmittelbar aus der Motor- und/oder Aggregatskühleinrichtung, insbesondere aus der stromabwärts der Motor- und/oder Aggregatskühleinrichtung angeordneten Ventilatoreinrichtung, umzulenken, z. B. nach seitlich außen oder nach unten, zweckmäßig zur Fahrbahn hin.

Die Motor- und/oder Aggregatskühleinrichtung ist vorzugsweise im Wesentlichen stehend verbaut.

Die Motor- und/oder Aggregatskühleinrichtung kann z. B. relativ zur Fahrzeuglängsachse im Wesentlichen parallel ausgerichtet sein. Es ist allerdings ebenfalls möglich, dass die Motor- und/oder Aggregatskühleinrichtung relativ zur Fahrzeuglängsachse im Wesentlichen rechtwinklig nach seitlich außen ausgerichtet ist. Des Weiteren ist eine Schrägausrichtung der Motor- und/oder Aggregatskühleinrichtung möglich, insbesondere so, dass sie relativ zur Fahrzeuglängsachse schräg ausgerichtet ist, z. B. in einem Winkelbereich von 25° bis 75°, vorzugsweise 45° +/- 10°.

Bei Schrägausrichtung der Motor- und/oder Aggregatskühleinrichtung kann die Motor- und/oder Aggregatskühleinrichtung sowohl von seitlich außen als auch über den Lufteinlasskasten mit Fahrtwind beaufschlagt werden.

Das Kraftfahrzeug kann zumindest ein Luftleitelement aufweisen, um Fahrtwind von seitlich außerhalb des Kraftfahrzeugs, insbesondere des Fahrzeugrahmens, hin zur Motor- und/oder Aggregatskühleinrichtung zu lenken.

Die stromaufwärts der Motor- und/oder Aggregatskühleinrichtung angeordnete Ventilatoreinrichtung kann die Motor- und/oder Aggregatskühleinrichtung z .B. schräg anblasen.

Es ist möglich, dass die Motor- und/oder Aggregatskühleinrichtung mehrere, z. B. zumindest drei, voneinander beabstandete, zweckmäßig in Luftströmungsrichtung hintereinander angeordnete Motor- und/oder Aggregatskühleinheiten umfasst. Die Motor- und/oder Aggregatskühleinheiten dienen vorzugsweise unterschiedlichen Kühlzwecken, z. B. der Motorkühlung, der Getriebeölkühlung, der Zwischenkühlung komprimierter Ansaugluft, etc.

Eine Motor- und/oder Aggregatskühleinheit kann somit z. B. zur Motorkühlung dienen. Eine andere Motor- und/oder Aggregatskühleinheit kann z. B. zur Zwischenkühlung komprimierter Ansaugluft dienen, insbesondere stromabwärts eines Turboladers. Eine andere Motor- und/oder Aggregatskühleinheit kann alternativ oder ergänzend zur Getriebeölkühlung dienen.

Es ist möglich, dass zwischen den Motor- und/oder Aggregatskühleinheiten eine Ventilatoreinrichtung angeordnet ist.

Das Kraftfahrzeug kann mehrere unterschiedlich ausgebildete, vorzugsweise an unterschiedlichen Positionen angeordnete, Luftleitelemente aufweisen, um Fahrtwind von seitlich außerhalb des Kraftfahrzeugs, insbesondere des Fahrzeugrahmens, hin zu den Motor- und/oder Aggregatskühleinheiten zu leiten. Dadurch kann z. B. gewährleistet werden, dass die voneinander beabstandeten, z. B. hintereinander angeordneten Motor- und/oder Aggregatskühleinheiten mittels den Luftleitelementen zweckmäßig unmittelbar mit Fahrtwind beaufschlagt werden.

Es ist möglich, dass zumindest eines von folgenden im Bauraum verbaut ist, der sich in Längsrichtung des Kraftfahrzeugs hinter dem Vorderradkotflügel, seitlich außerhalb des Fahrzeugrahmens und/oder unter dem Niveau des Kofferaufbaus erstreckt: die Motor- und/oder Aggregatskühleinrichtung, der Kühllufteinlasskasten, die stromaufwärts der Motor- und/oder Aggregatskühleinrichtung angeordnete Ventilatoreinrichtung, die stromabwärts der Motor- und/oder Aggregatskühleinrichtung angeordnete Ventilatoreinrichtung und/oder der Luftauslasskasten. Der Bauraum kann zweckmäßig seitlich außen von einem Seitenaufprallschutz begrenzt werden. Somit kann sich seitlich außerhalb der Motor- und/oder Aggregatskühleinrichtung, und vorzugsweise des Kühllufteinlasskastens, der stromaufwärts der Motor- und/oder Aggregatskühleinrichtung angeordneten Ventilatoreinrichtung, der stromabwärts der Motor- und/oder Aggregatskühleinrichtung angeordneten Ventilatoreinrichtung und/oder des Luftauslasskastens, ein Seitenaufprallschutz erstreckt.

Es ist möglich, dass ein Kraftstofftank zwischen Längsträgern des Fahrzeugrahmens angeordnet ist, so dass auf der Fahrzeugrahmenseite, auf der die Motor- und/oder Aggregatskühleinrichtung angeordnet ist, kein Kraftstofftank angeordnet ist.

Zumindest einige der zuvor beschriebenen Bauteile können durch Störpartikel, z. B. Schmutz, Spritzwasser, Steinchen, etc. beschädigt werden oder beeinträchtigt werden.

Zu diesem Zweck kann zumindest eines von folgenden mit einem Schutzelement versehen werden: die Motor- und/oder Aggregatskühleinrichtung, der Kühllufteinlasskasten, die stromaufwärts der Motor- und/oder Aggregatskühleinrichtung angeordnete Ventilatoreinrichtung, die stromabwärts der Motor- und/oder Aggregatskühleinrichtung angeordnete Ventilatoreinrichtung und/oder der Luftauslasskasten. Das Schutzelement ist zweckmäßig ausgeführt, um einen Luftdurchtritt zu gewährleisten, allerdings vor einem Eindringen von Störpartikeln, z. B. Schmutz, Steinchen, Spritzwasser, zu schützen. Hierzu kann das Schutzelement z. B. perforiert sein und/oder als Abschirmblende ausgeführt sein. Das Schutzelement kann z. B. ein zweckmäßig feinmaschiges Schutzgitter, ein Bodenblech und/oder ein zweckmäßig feinmaschiges Fliegennetz umfassen.

Die zuvor beschriebenen Bauteile, also insbesondere die Motor- und/oder Aggregatskühleinrichtung, der Kühllufteinlasskasten, die stromaufwärts der Motor- und/oder Aggregatskühleinrichtung angeordnete Ventilatoreinrichtung, die stromabwärts der Motor- und/oder Aggregatskühleinrichtung angeordnete Ventilatoreinrichtung und/oder der Luftauslasskasten, können eine Kühlerbaugruppe bilden, die z. B. auf nur einer Fahrzeugrahmenseite verbaut ist oder auf beiden Fahrzeugrahmenseiten verbaut ist. Ebenfalls ist es möglich, dass mehrere Kühlerbaugruppen auf einer Fahrzeugrahmenseite verbaut werden.

Das Kraftfahrzeug ist, wie schon zuvor erwähnt, zweckmäßig ein Lastkraftwagen, insbesondere ein sogenannter Koffer-Lastkraftwagen mit einem Kofferaufbau. Der Kofferaufbau ist vorzugsweise fest, insbesondere unlösbar an den Fahrzeugrahmen montiert. Alternativ kann der Kofferaufbau auch als sogenannter Wechselkofferaufbau ausgeführt sein, so dass der Fahrzeugrahmen zur wechselbaren Montage des Kofferaufbaus ausgeführt sein kann.

Das Kraftfahrzeug ist insbesondere keine Sattelzugmaschine.

Zu erwähnen ist außerdem, dass der Fahrzeugrahmen insbesondere das Fahrzeugchassis ist.

Zu erwähnen ist des Weiteren, dass die Motorkühleinrichtung zweckmäßig zum Kühlen eines Motors zum Antreiben des Kraftfahrzeugs ausgeführt ist und/oder die Aggregatskühleinrichtung zweckmäßig zum Kühlen eines Kraftfahrzeugs-Aggregats ausgeführt ist.

Zu erwähnen ist noch, dass über den Kühllufteinlasskasten Fahrtwind einströmbar und zur Motor- und/oder Aggregatskühleinrichtung leitbar ist, aber vorzugsweise auch Luft mittels einer Ventilatoreinrichtung für die Motor- und/oder Aggregatskühleinrichtung ansaugbar ist, z. B. im Stand- oder Staubetrieb des Kraftfahrzeugs.

Die zweckmäßig geschlossenflächige Fahrzeugfront des Fahrerhauses kann z. B. zumindest teilweise aus Kunststoff, Verbundwerkstoff und/oder Metall (z. B. Blech) ausgeführt sein und/oder eine geometrische Anpfeilung zur Luftwiderstandsverbesserung umfassen.

Die oben beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Seitenansicht eines Kraftfahrzeugs gemäß einer Ausführungsform der Erfindung,
- Figur 2: zeigt eine Draufsicht auf einen Teilbereich eines Kraftfahrzeugs gemäß einer Ausführungsform der Erfindung,
- Figur 3: zeigt eine Seitenansicht des Teilbereichs der Figur 2,
- Figur 4: zeigt eine Draufsicht auf einen Teilbereich eines Kraftfahrzeugs gemäß einer Ausführungsform der Erfindung,
- Figur 5: zeigt eine Seitenansicht des Teilbereichs der Figur 4,
- Figur 6: zeigt eine Draufsicht auf einen Teilbereich eines Kraftfahrzeugs gemäß einer Ausführungsform der Erfindung,
- Figur 7: zeigt eine Seitenansicht des Teilbereichs der Figur 6,
- Figur 8: zeigt eine perspektivische Ansicht einer Kraftfahrzeugfront gemäß einer Ausführungsform der Erfindung, und
- Figur 9: zeigt eine perspektivische Ansicht eines Kraftfahrzeugs gemäß einer Ausführungsform der Erfindung.

Die unter Bezugnahme auf die Figuren beschriebenen Ausführungsformen stimmen teilweise überein, so dass ähnliche oder identische Teile mit den gleichen Bezugszeichen versehen sind und zu deren Erläuterung auch auf die Beschreibung der anderen Figuren bzw. Ausführungsformen verwiesen wird, um Wiederholungen zu vermeiden.

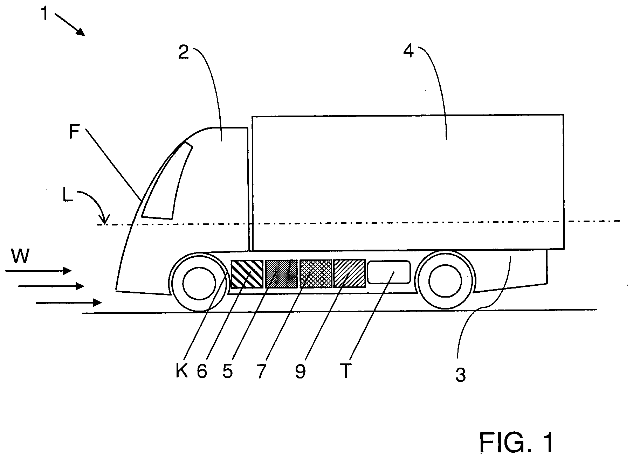

Figur 1 zeigt eine Seitenansicht eines Kraftfahrzeugs 1 in Form eines Koffer-Lastkraftwagens gemäß einer Ausführungsform der Erfindung.

Das Kraftfahrzeug 1 weist ein Fahrerhaus 2 und einen Fahrzeugrahmen (Fahrzeugchassis) 3 zur rahmenfest unlösbaren oder rahmenfest lösbaren Montage eines Kofferaufbaus 4 auf. Die Fahrzeugfront F des Fahrerhauses 2 ist konstruktiv, bauartbedingt geschlossenflächig ausgeführt, so dass sie keinen Lufteinlass für eine Motor- und/oder Aggregatskühlung aufweist und insoweit eine luftundurchströmte Fahrzeugfront F darstellt. Im Gegensatz zu üblichen Koffer-Lastkraftwägen kann eine erforderliche Motor- und/oder Aggregatskühleinrichtung folglich nicht über Fahrtwind beaufschlagt werden, der über Lufteinlässe in der Fahrzeugfront zugeführt wird.

Das Kraftfahrzeug 1 zeichnet sich deshalb insbesondere dadurch aus, dass eine Motor- und/oder Aggregatskühleinrichtung 5 fahrzeugrahmenseitig und somit zweckmäßig chassisseitig angeordnet ist, vorzugsweise seitlich außen am Fahrzeugrahmen 3, so dass zweckmäßig Fahrtwind, der unter und/oder neben der Fahrzeugfront F vorbeiströmt, zur Motor- und/oder Aggregatskühlung nutzbar ist.

Stromaufwärts der Motor- und/oder Aggregatskühleinrichtung 5 ist ein Kühllufteinlasskasten 6 angeordnet, über den Fahrtwind W zur Motor- und/oder Aggregatskühleinrichtung 5 leitbar ist.

Stromabwärts der Motor- und/oder Aggregatskühleinrichtung 5 ist eine Ventilatoreinrichtung 7 angeordnet zur zweckmäßigen Absaugung erwärmter Luft von der Motor- und/oder Aggregatskühleinrichtung 5, insbesondere deren Kühlrippen, was insbesondere im Stand- oder Staubetrieb des Kraftfahrzeugs 1 erforderlich werden kann.

Stromabwärts der Ventilatoreinrichtung 7 ist ein Luftauslasskasten 9, insbesondere ein Absaugkasten, angeordnet, um Luft aus der Motor- und/oder Aggregatskühleinrichtung 5 und insbesondere der Ventilatoreinrichtung 7 nach unten hin zur Fahrbahn umzulenken.

Bezugszeichen K kennzeichnet einen Vorderradkotflügel, während Bezugszeichen T einen Kraftstofftank kennzeichnet.

Es wird ersichtlich, dass die Kühlerbaugruppe aus Motor- und/oder Aggregatskühleinrichtung 5, Kühllufteinlasskasten 6, Ventilatoreinrichtung 7 und Luftauslasskasten 9 in Längsrichtung L des Kraftfahrzeugs 1 zwischen dem Vorderradkotflügel K und dem Kraftstofftank T angeordnet ist.

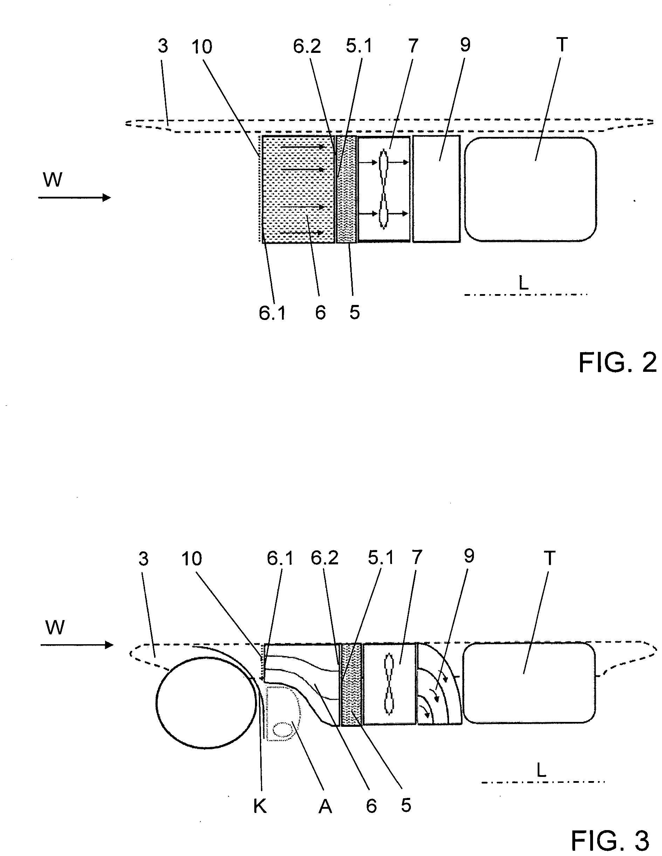

Figur 2 zeigt eine Draufsicht eines Teilbereichs eines Kraftfahrzeugs 1 gemäß einer Ausführungsform der Erfindung, während Figur 3 eine zugehörige Seitenansicht des Teilbereichs zeigt.

Figuren 2 und 3 zeigen insbesondere, dass die Kühlerbaugruppe aus Motor- und/oder Aggregatskühleinrichtung 5, Kühllufteinlasskasten 6, Ventilatoreinrichtung 7 und Luftauslasskasten 9 im Wesentlichen parallel zur Längsrichtung L des Kraftfahrzeugs 1 ausgerichtet ist.

Der Kühllufteinlasskasten 6 umfasst einen Kühllufteinlass 6.1 und einen Kühlluftauslass 6.2.

Figur 3 zeigt, dass der Kühllufteinlass 6.1 kleiner ist als der Kühlluftauslass 6.2, so dass sich der Querschnitt des Kühllufteinlasskastens 6 zur Motor- und/oder Aggregatskühleinrichtung 5 hin vergrößert. Der Kühlluftauslass 6.2 erstreckt sich über die im Wesentlichen gesamte Breite und Höhe eines Kühllufteinlasses 5.1 der Motor- und/oder Aggregatskühleinrichtung 5.

Eine weitere Besonderheit des Kühllufteinlasskastens 6 ist, dass dessen Kühllufteinlass 6.1 benachbart zum Vorderradkotflügel K angeordnet ist, so dass er vom Vorderradkotflügel K vor Spritzwasser geschützt wird. Der Kühllufteinlass 6.1 ist nach oben versetzt, so dass darunter Bauraum z. B. für eine Abgaskomponente A des Kraftfahrzeugs 1 entsteht.

Figuren 2 und 3 zeigen ferner ein Schutzelement 10, das z. B. als übliches feinmaschiges Gitter ausgeführt sein kann, um ein Eindringen von Störpartikeln, z. B. Schmutz, Steinchen, etc. in den Kühllufteinlasskasten 6 zu verhindern oder zumindest zu reduzieren, allerdings einen Luftdurchtritt zulässt.

Das Innere des Kühllufteinlasskastens 6 kann aufgrund seiner Gesamtform mit einigen Luftleitelementen versehen sein, die zusätzlich zur Stabilität des Kühllufteinlasskastens 6 beitragen.

Erfordert es die Gesamtkühlleistung aller Aggregate und/oder Motorabschnitte, können zwei Kühlbaugruppen aus Kühllufteinlasskasten 6, Motor- und/oder Aggregatskühleinrichtung 5, Ventilatoreinrichtung 7 und zweckmäßig Luftauslasskasten 9 vorgesehen werden, die z. B. seriell hintereinander auf einer Fahrzeugrahmenseite oder zumindest eine auf der einen Fahrzeugrahmenseite und zumindest eine auf der anderen Fahrzeugrahmenseite angeordnet werden können. Der Luftauslasskasten 9 kann insbesondere dann weggelassen werden, wenn dahinter kein Kraftstofftank T angeordnet ist.

Aus den Figuren 1 bis 3 ergibt sich, dass die Kühlbaugruppe aus Kühllufteinlasskasten 6, Motor- und/oder Aggregatskühleinrichtung 5, Ventilatoreinrichtung 7 und vorzugsweise Luftauslasskasten 9 im Bauraum angeordnet ist, der sich in Längsrichtung L des Kraftfahrzeugs 1 hinter dem Vorderradkotflügel K, seitlich außerhalb eines Längsträgers des Fahrzeugrahmens 3 und unter dem Niveau des Kofferaufbaus 4 erstreckt. Seitlich außen kann der Bauraum durch einen nicht gezeigten Seitenaufprallschutz begrenzt sein, nach hinten hin z. B. durch den Kraftstofftank T oder ein Hinterrad des Kraftfahrzeugs 1.

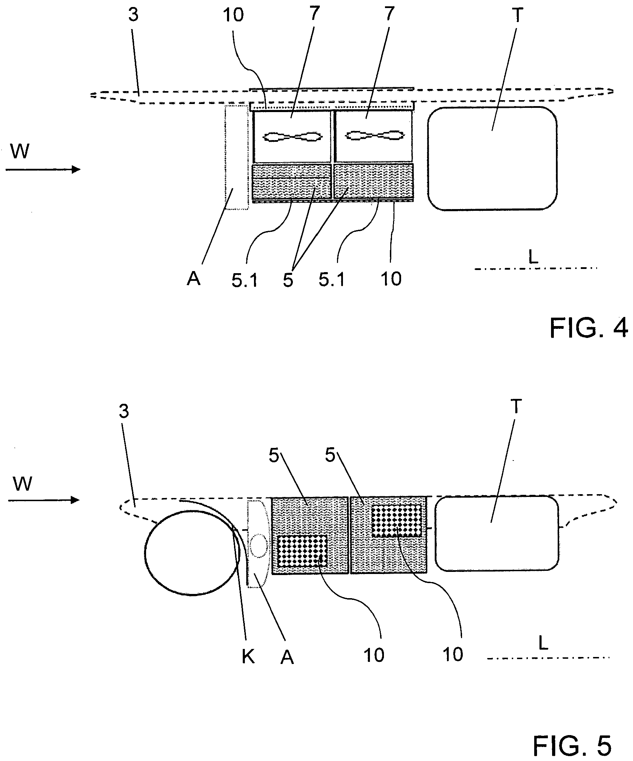

Figur 4 zeigt eine Draufsicht eines Teilbereichs eines Kraftfahrzeugs 1 gemäß einer anderen Ausführungsform der Erfindung, während Figur 5 eine zugehörige Seitenansicht des Teilbereichs zeigt.

Eine Besonderheit der in den Figuren 4 und 5 gezeigten Ausführungsformen ist, dass die Motor- und/oder Aggregatskühleinrichtung 5 und vorzugsweise ebenfalls eine stromabwärts der Motor- und/oder Aggregatskühleinrichtung 5 angeordnete Ventilatoreinrichtung 7 relativ zur Fahrzeuglängsachse L im Wesentlichen rechtwinklig ausgerichtet ist. Daraus folgt, dass der Kühllufteinlass 5.1 der Motor- und/oder Aggregatskühleinrichtung 5 insbesondere relativ zur Längsrichtung L des Kraftfahrzeugs 1 rechtwinklig nach außen weist.

Um ein Eindringen von Störpartikeln in die Motor- und/oder Aggregatskühleinrichtung 5 zu verhindern oder zumindest zu reduzieren, ist die Motor- und/oder Aggregatskühleinrichtung 5 mit einem Schutzelement 10, z. B. einem Abdeckgitter versehen.

Ebenfalls kann die Ansaugseite der Ventilatoreinrichtung 7 ein Schutzelement 10 z. B. in Form eines üblichen feinmaschigen Netzes umfassen. Ebenfalls kann ein zusätzliches Schutzelement in Form eines Bodenblechs auf der Ansaugseite der Ventilatoreinrichtung 7 zur Luftreinhaltung angesaugter Luft beitragen.

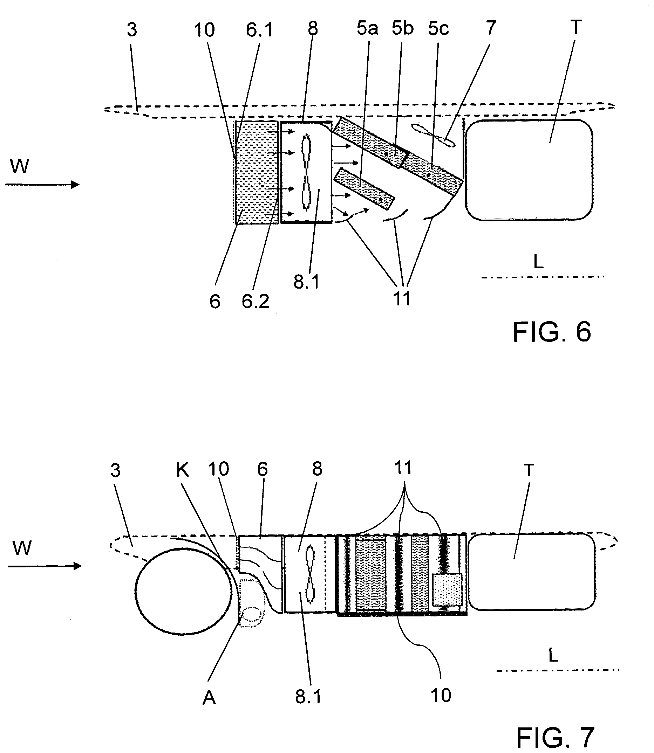

Figur 6 zeigt eine Draufsicht eines Teilbereichs eines Kraftfahrzeugs 1 gemäß einer Ausführungsform der Erfindung, während Figur 7 eine zugehörige Seitenansicht zeigt.

Eine Besonderheit der in den Figuren 6 und 7 gezeigten Ausführungsformen ist, dass die Motor- und/oder Aggregatskühleinrichtung 5 als Schräganordnung ausgeführt ist, insbesondere so, dass sie relativ zur Fahrzeuglängsachse L schräg nach seitlich außen ausgerichtet ist, z. B. in einem Winkelbereich zwischen 30° und 60°.

Stromaufwärts der Motor- und/oder Aggregatskühleinrichtung 5 ist eine Ventilatoreinrichtung 8 angeordnet und stromaufwärts der Ventilatoreinrichtung 8 der Kühllufteinlasskasten 6.

Die Ventilatoreinrichtung 8 dient dazu, die Ansaugseite der Motor- und/oder Aggregatskühleinrichtung 5 mit Luft zu beaufschlagen, z. B. in einem Stand- oder Staubetrieb des Kraftfahrzeugs 1. Die Ventilatoreinrichtung 8 umfasst einen Luftdurchlass 8.1, durch den hindurch die Motor- und/oder Aggregatskühleinrichtung 5 mit Fahrtwind beaufschlagbar ist. Damit möglichst viel Fahrtwind die Ventilatoreinrichtung 8 durchströmen kann, umfasst die Ventilatoreinrichtung 8 vorzugsweise weniger als vier Ventilatorblätter, wobei die Ventilatorblätter zusätzlich relativ schmal ausgeführt sein können.

Stromabwärts der Motor- und/oder Aggregatskühleinrichtung 5 ist eine Ventilatoreinrichtung 7 angeordnet, um zweckmäßig im Stand- oder Staubetrieb des Kraftahrzeugs 1 Wärme von der Absaugseite der Motor- und/oder Aggregatskühleinrichtung 5 abzusaugen.

Die Motor- und/oder Aggregatskühleinrichtung 5 umfasst voneinander beabstandete, hintereinander angeordnete Motor- und/oder Aggregatskühleinheiten 5a, 5b und 5c. Um die Motor- und/oder Aggregatskühleinheiten 5a, 5b und 5c mit Fahrtwind zu beaufschlagen, sind mehrere Luftleitelemente 11 vorgesehen, die Fahrtwind von seitlich außerhalb des Kraftfahrzeugs 1 hin zu den Motor- und/oder Aggregatskühleinheiten 5a, 5b und 5c lenken.

So kann z. B. ein in Fahrtwindrichtung W erstes Luftleitelement 11 angeordnet und ausgebildet sein, um Fahrtwind aus dem Lufteinlasskasten 6 und der Ventilatoreinrichtung 8 auf die Motor- und/oder Aggregatskühleinheit 5a zu lenken.

Nachgeordnet kann ein längeres Luftleitelement 11 angeordnet und ausgebildet sein, um Fahrtwind von seitlich außerhalb des Kraftfahrzeugs 1 hin zur Motor- und/oder Aggregatskühleinheit 5c zu lenken.

Ferner kann ein wiederum nachgeordnetes Luftleitelement 11 angeordnet und ausgebildet sein, um Fahrtwind von seitlich außerhalb des Kraftfahrzeugs 1 in eine äußere Kühlerecke der Motor- und/oder Aggregatskühleinheit 5b zu lenken.

Die Kühlbaugruppe aus Kühllufteinlasskasten 6, Ventilatoreinrichtung 8, Motor- und/oder Aggregatskühleinrichtung 5 und Ventilatoreinrichtung 7 kann an der Unterseite komplett mit einem Schutzelement 10, z. B. einem Bodenblech geschützt sein. Die Oberseite der Kühlbaugruppe kann teilweise oder komplett mit einem Schutzelement, z. B einem feinmaschigen Fliegennetz abgedeckt werden.

Die Ventilatoreinrichtung 7 kann mit einer Abströmbegrenzung versehen sein, um einen Wärmeeintrag in Nachbaraggregate zu verhindern oder zumindest zu reduzieren.

Es ist möglich, zwischen den Motor- und/oder Aggregatskühleinheiten 5a, 5b und 5c eine Ventilatoreinrichtung anzuordnen.

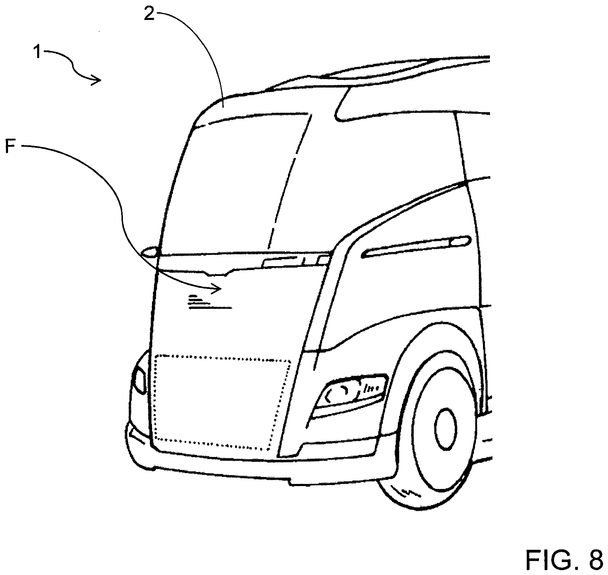

Figur 8 zeigt eine perspektivische Ansicht einer Kraftfahrzeugfront eines Kraftfahrzeugs 1 gemäß einer Ausführungsform der Erfindung.

Die Fahrzeugfront F des Fahrerhauses 2 ist konstruktiv geschlossenflächig ausgeführt, um anströmende Luft im Wesentlichen homogen und im Wesentlichen verwirbelungsfrei zu teilen und eine glatt anliegende Weiterströmung an der Fahrzeugfront F zu erreichen, zugleich ist sie geometrisch angepfeilt zur Luftwiderstandsreduzierung. Die in Figur 8 gestrichelte Linie deutet einen optionalen Stauraum an, der über einen Teil der Frontseite F zugänglich ist.

Im Gegensatz zu üblichen Koffer-Lastkraftwägen kann die Motor- und/oder Aggregatskühleinrichtung nicht über Fahrtwind beaufschlagt werden, der über Lufteinlässe in der Fahrzeugfront zugeführt wird. Vielmehr kann zweckmäßig unter und/oder neben der Fahrzeugfront F vorbeiströmender Fahrtwind zur Motor- und/oder Aggregatskühlung genutzt werden.

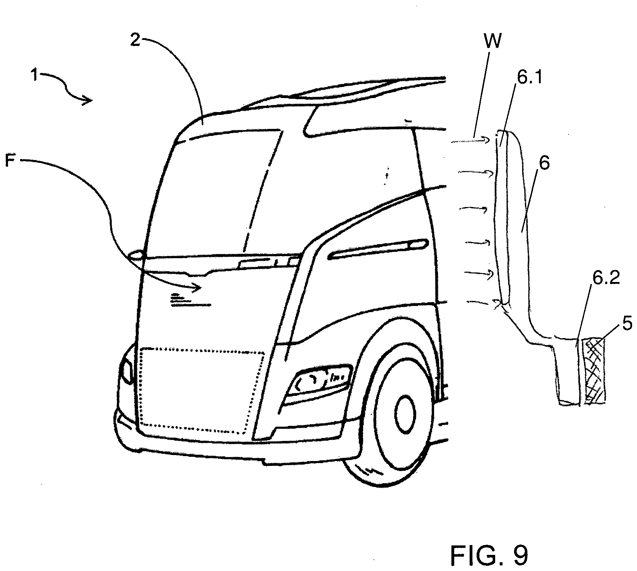

Figur 9 zeigt eine perspektivische Ansicht eines Kraftfahrzeugs 1 gemäß einer Ausführungsform der Erfindung.

Eine Besonderheit der in Figur 9 gezeigten Ausführungsform ist, dass der Kühllufteinlass 6.1 des Kühllufteinlasskastens 6 größer ist als der Kühlluftauslass 6.2 des Kühllufteinlasskastens 6, so dass sich ein Querschnitt des Kühllufteinlasskastens 6 zumindest abschnittsweise zur Motor- und/oder Aggregatskühleinrichtung 5 hin verjüngt. Eine weitere Besonderheit ist, dass der Kühllufteinlasskasten 6 an einer Seitenwand des Fahrerhauses 2 angeordnet sein kann, vorzugsweise so, dass sich der Kühllufteinlass 6.1 entlang der Seitenwand des Fahrerhauses 2 erstreckt. Bevorzugt ist, dass sich der Kühllufteinlass 6.1 an einem hinteren, seitlichen Bereich des Fahrerhauses 2 erstreckt.

### Bezugszeichenliste

- 1: Kraftfahrzeug
- 2: Fahrerhaus
- 3: Fahrzeugrahmen, insbesondere Fahrzeugchassis, zur Montage eines Kofferaufbaus
- 4: Kofferaufbau
- 5: Motor- und/oder Aggregatskühleinrichtung
- 5.1: Kühllufteinlass der Motor- und/oder Aggregatskühleinrichtung
- 6: Kühllufteinlasskasten
- 6.1: Kühllufteinlass des Kühllufteinlasskastens
- 6.2: Kühlluftauslass des Kühllufteinlasskastens
- 7: Ventilatoreinrichtung, insbesondere stromabwärts der Motor- und/oder Aggregatskühleinrichtung
- 8: Ventilatoreinrichtung, insbesondere stromaufwärts der Motor- und/oder Aggregatskühleinrichtung
- 9: Luftauslasskasten
- 10: Schutzelement(e)
- 11: Luftleitelement(e)
- F: Fahrzeugfront, insbesondere Front-Außenhaut
- L: Fahrzeuglängsachse
- W: Fahrtwindrichtung/Fahrtwind
- K: Vorderradkotflügel
- T: Kraftstofftank
- A: Abgaskomponente

## Patentansprüche

1. Kraftfahrzeug (1), nämlich Lastkraftwagen, insbesondere Koffer-Lastkraftwagen, mit einem Fahrerhaus (2) und einem Fahrzeugrahmen (3) zur Montage eines Kofferaufbaus (4), wobei zumindest eine Motor- und Aggregatskühleinrichtung (5) fahrzeugrahmenseitig angeordnet ist, **dadurch gekennzeichnet, dass** die Fahrzeugfront (F) des Fahrerhauses (2) konstruktiv geschlossenflächig ausgeführt ist, so dass sie keinen Lufteinlass zur Motor- und Aggregatskühlung aufweist.

2. Kraftfahrzeug (1) nach Anspruch 1, **dadurch gekennzeichnet, dass** die Motor- und/oder Aggregatskühleinrichtung (5) fahrzeugrahmenseitig angeordnet ist und zwar seitlich außen am Fahrzeugrahmen (3) oder zwischen zwei Längsträgern des Fahrzeugrahmens (3).

3. Kraftfahrzeug (1) nach einem der vorhergehenden Ansprüche, **dadurch gekennzeichnet, dass** die Motor- und/oder Aggregatskühleinrichtung (5) an einem Längsträger des Fahrzeugrahmens (3) montiert ist, vorzugsweise seitlich außen.

4. Kraftfahrzeug (1) nach einem der vorhergehenden Ansprüche, **dadurch gekennzeichnet, dass** stromaufwärts der Motor- und/oder Aggregatskühleinrichtung (5) ein Kühllufteinlasskasten (6) angeordnet ist.

5. Kraftfahrzeug (1) nach Anspruch 4, **dadurch gekennzeichnet, dass** ein Kühllufteinlass (6.1) des Kühllufteinlasskastens (6) kleiner ist als ein Kühlluftauslass (6.2) des Kühllufteinlasskastens (6), so dass sich vorzugsweise ein Querschnitt des Kühllufteinlasskastens (6) zur Motor- und/oder Aggregatskühleinrichtung (5) hin vergrößert, oder ein Kühllufteinlass (6.1) des Kühllufteinlasskastens (6) größer ist als ein Kühlluftauslass (6.2) des Kühllufteinlasskastens (6), so dass sich vorzugsweise ein Querschnitt des Kühllufteinlasskastens (6) zur Motor- und/oder Aggregatskühleinrichtung (5) hin verjüngt.

6. Kraftfahrzeug (1) nach Anspruch 4 oder 5, **dadurch gekennzeichnet, dass** ein Kühlluftauslass (6.2) des Kühllufteinlasskastens (6) sich über die im Wesentlichen gesamte Breite und Höhe des Kühllufteinlasses (5.1) der Motor- und/oder Aggregatskühleinrichtung (5) erstreckt.

7. Kraftfahrzeug (1) nach einem der Ansprüche 4 bis 6, **dadurch gekennzeichnet, dass** ein Kühllufteinlass (6.1) des Kühllufteinlasskastens (6)
- benachbart zu einem Vorderradkotflügel (K) angeordnet ist, um vom Vorderradkotflügel (K) vor Spritzwasser geschützt zu werden,
- nach oben versetzt ist, so dass dadurch darunter Bauraum vorzugsweise für eine Abgaskomponente (A) des Kraftfahrzeugs (1), entsteht, und/oder
- sich entlang einer Seitenwand des Fahrerhauses (2) erstreckt, vorzugsweise in einem hinteren Bereich des Fahrerhauses (2).

8. Kraftfahrzeug (1) nach einem der Ansprüche 5 bis 7, **dadurch gekennzeichnet, dass** innerhalb des Kühllufteinlasskastens (6) zumindest ein Luftleitelement angeordnet ist.

9. Kraftfahrzeug (1) nach einem der vorhergehenden Ansprüche, **dadurch gekennzeichnet, dass** stromaufwärts und/oder stromabwärts der Motor- und/oder Aggregatskühleinrichtung (5) eine Ventilatoreinrichtung (7, 8) angeordnet ist.

10. Kraftfahrzeug nach Anspruch 9, **dadurch gekennzeichnet, dass** die stromaufwärts der Motor- und/oder Aggregatskühleinrichtung (5) angeordnete Ventilatoreinrichtung (8) einen Luftdurchlass (8.1) aufweist, durch den hindurch die Motor- und/oder Aggregatskühleinrichtung (5) mit Fahrtwind beaufschlagbar ist.

11. Kraftfahrzeug nach Anspruch 9 oder 10, **dadurch gekennzeichnet, dass** die stromaufwärts der Motor- und/oder Aggregatskühleinrichtung (5) angeordnete Ventilatoreinrichtung (8) weniger als vier Ventilatorblätter aufweist.

12. Kraftfahrzeug (1) nach einem der vorhergehenden Ansprüche, **dadurch gekennzeichnet, dass** das Kraftfahrzeug (1) einen Luftauslasskasten (9) umfasst, zur Umlenkung von Luft aus der Motor- und/oder Aggregatskühleinrichtung (5),.

13. Kraftfahrzeug (1) nach einem der vorhergehenden Ansprüche, **dadurch gekennzeichnet, dass** die Motor- und/oder Aggregatskühleinrichtung (5) relativ zur Fahrzeuglängsachse (L) im Wesentlichen parallel, oder relativ zur Fahrzeuglängsachse (L) im Wesentlichen rechtwinklig nach seitlich außen oder relativ zur Fahrzeuglängsachse (L) schräg nach seitlich außen ausgerichtet ist.

14. Kraftfahrzeug (1) nach einem der vorhergehenden Ansprüche, **dadurch gekennzeichnet, dass** das Kraftfahrzeug (1) zumindest ein Luftleitelement (11) aufweist, um Fahrtwind von seitlich außerhalb des Kraftfahrzeugs (1) hin zur Motor- und/oder Aggregatskühleinrichtung (5) zu lenken.

15. Kraftfahrzeug (1) nach einem der vorhergehenden Ansprüche, **dadurch gekennzeichnet, dass** die Motor- und/oder Aggregatskühleinrichtung (5) mehrere voneinander beabstandete Motor- und/oder Aggregatskühleinheiten (5a, 5b, 5c) umfasst und vorzugsweise die Motor- und/oder Aggregatskühleinheiten (5a, 5b, 5c) unterschiedlichen Kühlzwecken dienen.

16. Kraftfahrzeug (1) nach Anspruch 15, **dadurch gekennzeichnet, dass** das Kraftfahrzeug (1) mehrere vorzugsweise unterschiedlich ausgebildete Luftleitelemente (11) aufweist, um Fahrtwind von seitlich außerhalb des Kraftfahrzeugs (1) hin zu den Motor- und/oder Aggregatskühleinheiten (5a, 5b, 5c) zu lenken.

17. Kraftfahrzeug (1) nach einem der Ansprüche 4 bis 16, **dadurch gekennzeichnet, dass** der Kühllufteinlasskasten (6) in Fahrzeuglängsrichtung (L) hinter einem Vorderradkotflügel (K) und unter dem Niveau des Kofferaufbaus (4) angeordnet ist.

18. Kraftfahrzeug (1) nach einem der Ansprüche 4 bis 17, **dadurch gekennzeichnet, dass** seitlich außerhalb der Motor- und/oder Aggregatskühleinrichtung (5) und des Kühllufteinlasskastens (6) sich ein Seitenaufprallschutz erstreckt.

19. Kraftfahrzeug (1) nach einem der vorhergehenden Ansprüche, **dadurch gekennzeichnet, dass** ein Kraftstofftank zwischen Längsträgern des Fahrzeugrahmens (3) angeordnet ist, so dass auf der Fahrzeugrahmenseite, auf der die Motor- und/oder Aggregatskühleinrichtung (5) angeordnet ist, kein Kraftstofftank angeordnet ist.

20. Kraftfahrzeug (1) nach einem der vorhergehenden Ansprüche, **dadurch gekennzeichnet, dass** zumindest die Motor- und/oder Aggregatskühleinrichtung (5) mit einem Schutzelement (10) versehen ist, das einen Luftdurchtritt gewährleistet, aber vor einen Eindringen von Störpartikeln schützt.

21. Kraftfahrzeug (1) nach einem der Ansprüche 4 bis 20, **dadurch gekennzeichnet, dass** zumindest der Kühllufteinlasskasten (6) mit einem Schutzelement (10) versehen ist, das einen Luftdurchtritt gewährleistet, aber vor einen Eindringen von Störpartikeln schützt.

## Claims

1. A motor vehicle (1), namely a lorry, in particular a box lorry, having a driver's cab (2) and having a vehicle frame (3) for mounting a box body (4), wherein at least one engine- and unit-cooling device (5) is arranged on the vehicle frame side, **characterized in that** the vehicle front (F) of the driver's cab (2) is structurally designed to have a continuous surface, with the result that it has no air inlet for engine and unit cooling.

2. The motor vehicle (1) according to Claim 1, **characterized in that** the engine- and/or unit-cooling device (5) is arranged on the vehicle frame side, to be precise laterally on the outside of the vehicle frame (3) or between two longitudinal members of the vehicle frame (3).

3. The motor vehicle (1) according to either of the preceding claims, **characterized in that** the engine- and/or unit-cooling device (5) is mounted on a longitudinal member of the vehicle frame (3), preferably laterally on the outside.

4. The motor vehicle (1) according to one of the preceding claims, **characterized in that** a cooling-air inlet box (6) is arranged upstream of the engine- and/or unit-cooling device (5).

5. The motor vehicle (1) according to Claim 4, **characterized in that** a cooling-air inlet (6.1) of the cooling-air inlet box (6) is smaller than a cooling-air outlet (6.2) of the cooling-air inlet box (6), with the result that preferably a cross section of the cooling-air inlet box (6) increases towards the engine- and/or unit-cooling device (5), or a cooling-air inlet (6.1) of the cooling-air inlet box (6) is larger than a cooling-air outlet (6.2) of the cooling-air inlet box (6), with the result that preferably a cross section of the cooling-air inlet box (6) tapers towards the engine- and/or unit-cooling device (5).

6. The motor vehicle (1) according to Claim 4 or 5, **characterized in that** a cooling-air outlet (6.2) of the cooling-air inlet box (6) extends over the substantially entire width and height of the cooling-air inlet (5.1) of the engine- and/or unit-cooling device (5).

7. The motor vehicle (1) according to one of Claims 4 to 6, **characterized in that** a cooling-air inlet (6.1) of the cooling-air inlet box (6)
- is arranged adjacent to a front-wheel mudguard (K) in order to be protected by the front-wheel mudguard (K) from water spray,
- is offset upwardly, with the result that there is thereby created below it installation space preferably for an exhaust-gas component (A) of the motor vehicle (1), and/or
- extends along a side wall of the driver's cab (2), preferably in a rear region of the driver's cab (2).

8. The motor vehicle (1) according to one of Claims 5 to 7, **characterized in that** at least one air-guiding element is arranged within the cooling-air inlet box (6) .

9. The motor vehicle (1) according to one of the preceding claims, **characterized in that** a fan device (7, 8) is arranged upstream and/or downstream of the engine- and/or unit-cooling device (5).

10. The motor vehicle according to Claim 9, **characterized in that** the fan device (8) arranged upstream of the engine- and/or unit-cooling device (5) has an air passage (8.1) through which the engine- and/or unit-cooling device (5) can be charged with relative wind.

11. The motor vehicle according to Claim 9 or 10, **characterized in that** the fan device (8) arranged upstream of the engine- and/or unit-cooling device (5) has fewer than four fan blades.

12. The motor vehicle (1) according to one of the preceding claims, **characterized in that** the motor vehicle (1) comprises an air-outlet box (9) for deflecting air from the engine- and/or unit-cooling device (5).

13. The motor vehicle (1) according to one of the preceding claims, **characterized in that** the engine- and/or unit-cooling device (5) is oriented substantially parallel relative to the vehicle longitudinal axis (L), or substantially at a right angle laterally outwards relative to the vehicle longitudinal axis (L) or obliquely laterally outwards relative to the vehicle longitudinal axis (L) .

14. The motor vehicle (1) according to one of the preceding claims, **characterized in that** the motor vehicle (1) has at least one air-guiding element (11) in order to guide relative wind from laterally outside the motor vehicle (1) towards the engine- and/or unit-cooling device (5).

15. The motor vehicle (1) according to one of the preceding claims, **characterized in that** the engine- and/or unit-cooling device (5) comprises a plurality of spaced-apart engine- and/or unit-cooling units (5a, 5b, 5c), and preferably the engine- and/or unit-cooling units (5a, 5b, 5c) serve different cooling purposes.

16. The motor vehicle (1) according to Claim 15, **characterized in that** the motor vehicle (1) has a plurality of preferably differently designed air-guiding elements (11) in order to guide relative wind from laterally outside the motor vehicle (1) towards the engine- and/or unit-cooling units (5a, 5b, 5c).

17. The motor vehicle (1) according to one of Claims 4 to 16, **characterized in that** the cooling-air inlet box (6) is arranged in the vehicle longitudinal direction (L) behind a front-wheel mudguard (K) and below the level of the box body (4).

18. The motor vehicle (1) according to one of Claims 4 to 17, **characterized in that** a side-impact guard extends laterally outside of the engine- and/or unit-cooling device (5) and of the cooling-air inlet box (6).

19. The motor vehicle (1) according to one of the preceding claims, **characterized in that** a fuel tank is arranged between longitudinal members of the vehicle frame (3), with the result that no fuel tank is arranged on the vehicle frame side on which the engine- and/or unit-cooling device (5) is arranged.

20. The motor vehicle (1) according to one of the preceding claims, **characterized in that** at least the engine- and/or unit-cooling device (5) is provided with a protective element (10) which ensures air passage but protects from an ingress of interfering particles.

21. The motor vehicle (1) according to one of Claims 4 to 20, **characterized in that** at least the cooling-air inlet box (6) is provided with a protective element (10) which ensures air passage but protects from an ingress of interfering particles.

## Revendications

1. Véhicule automobile (1), à savoir véhicule poids-lourd, en particulier camion-fourgon, comprenant une cabine de conducteur (2) et un châssis de véhicule (3) pour le montage d'une carrosserie de fourgon (4), au moins un dispositif de refroidissement de moteur et de groupe (5) étant disposé du côté du châssis du véhicule, **caractérisé en ce que** l'avant de véhicule (F) de la cabine de conducteur (2) est réalisé avec une construction à surface fermée de telle sorte qu'il ne présente aucune entrée d'air vers le refroidissement du moteur et de groupe.

2. Véhicule automobile (1) selon la revendication 1, **caractérisé en ce que** le dispositif de refroidissement de moteur et/ou de groupe (5) est disposé du côté du châssis de véhicule et en l'occurrence latéralement à l'extérieur sur le châssis de véhicule (3) ou entre deux longerons du châssis de véhicule (3).

3. Véhicule automobile (1) selon l'une quelconque des revendications précédentes, **caractérisé en ce que** le dispositif de refroidissement de moteur et/ou de groupe (5) est monté au niveau d'un longeron du châssis de véhicule (3), de préférence latéralement à l'extérieur.

4. Véhicule automobile (1) selon l'une quelconque des revendications précédentes, **caractérisé en ce qu'**un caisson d'entrée d'air de refroidissement (6) est disposé en amont du dispositif de refroidissement de moteur et/ou de groupe (5).

5. Véhicule automobile (1) selon la revendication 4, **caractérisé en ce qu'**une entrée d'air de refroidissement (6.1) du caisson d'entrée d'air de refroidissement (6) est inférieure à une sortie d'air de refroidissement (6.2) du caisson d'entrée d'air de refroidissement (6), de telle sorte que de préférence une section transversale du caisson d'entrée d'air de refroidissement (6) soit accrue vers le dispositif de refroidissement de moteur et/ou de groupe (5), ou une entrée d'air de refroidissement (6.1) du caisson d'entrée d'air de refroidissement (6) est supérieure à une sortie d'air de refroidissement (6.2) du caisson d'entrée d'air de refroidissement (6) de telle sorte que de préférence une section transversale du caisson d'entrée d'air de refroidissement (6) se rétrécisse vers le dispositif de refroidissement de moteur et/ou de groupe (5).

6. Véhicule automobile (1) selon la revendication 4 ou 5, **caractérisé en ce qu'**une sortie d'air de refroidissement (6.2) du caisson d'entrée d'air de refroidissement (6) s'étend sur essentiellement toute la largeur et la hauteur de l'entrée d'air de refroidissement (5.1) du dispositif de refroidissement de moteur et/ou de groupe (5).

7. Véhicule automobile (1) selon l'une quelconque des revendications 4 à 6, **caractérisé en ce qu'**une entrée d'air de refroidissement (6) du caisson d'entrée d'air de refroidissement (6)
- est disposée à côté d'une aile de roue avant (K), afin d'être protégée par l'aile de roue avant (K) contre les projections d'eau,
- est décalée vers le haut de telle sorte que l'on obtienne ainsi un espace de construction sous-jacent, de préférence pour un composant de gaz d'échappement (4) du véhicule automobile (1), et/ou
- s'étend le long d'une paroi latérale de la cabine de conducteur (2), de préférence dans une région arrière de la cabine de conducteur (2) .

8. Véhicule automobile (1) selon l'une quelconque des revendications 5 à 7, **caractérisé en ce qu'**au moins un élément de guidage d'air est disposé à l'intérieur du caisson d'entrée d'air de refroidissement (6).

9. Véhicule automobile (1) selon l'une quelconque des revendications précédentes, **caractérisé en ce qu'**en amont et/en aval du dispositif de refroidissement de moteur et/ou de groupe (5) est disposé un dispositif de ventilateur (7, 8).

10. Véhicule automobile selon la revendication 9, **caractérisé en ce que** le dispositif de ventilateur (8) disposé en amont du dispositif de refroidissement de moteur et/ou de groupe (5) présente un passage d'air (8.1) à travers lequel le dispositif de refroidissement de moteur et/ou de groupe (5) peut être sollicité avec le vent relatif.

11. Véhicule automobile selon la revendication 9 ou 10, **caractérisé en ce que** le dispositif de ventilateur (8) disposé en amont du dispositif de refroidissement de moteur et/ou de groupe (5) présente moins de quatre pales de ventilateur.

12. Véhicule automobile (1) selon l'une quelconque des revendications précédentes, **caractérisé en ce que** le véhicule automobile (1) présente un caisson de sortie d'air (9) pour dévier l'air hors du dispositif de refroidissement de moteur et/ou de groupe (5).

13. Véhicule automobile (1) selon l'une quelconque des revendications précédentes, **caractérisé en ce que** le dispositif de refroidissement de moteur et/ou de groupe (5) est orienté par rapport à l'axe longitudinal du véhicule (L) essentiellement parallèlement, ou par rapport à l'axe longitudinal du véhicule (L) essentiellement à angle droit latéralement vers l'extérieur ou par rapport à l'axe longitudinal du véhicule (L) obliquement latéralement vers l'extérieur.

14. Véhicule automobile (1) selon l'une quelconque des revendications précédentes, **caractérisé en ce que** le véhicule automobile (1) présente au moins un élément de guidage d'air (11) afin de dévier le vent relatif latéralement depuis l'extérieur du véhicule automobile (1) vers le dispositif de refroidissement de moteur et/ou de groupe (5).

15. Véhicule automobile (1) selon l'une quelconque des revendications précédentes, **caractérisé en ce que** le dispositif de refroidissement de moteur et/ou de groupe (5) présente plusieurs unités de refroidissement de moteur et/ou de groupe (5a, 5b, 5c) et de préférence les unités de refroidissement de moteur et/ou de groupe (5a, 5b, 5c) servent à des fins de refroidissement différentes.

16. Véhicule automobile (1) selon la revendication 15, **caractérisé en ce que** le véhicule (1) présente plusieurs éléments de guidage d'air (11) de préférence réalisés différemment, afin de dévier le vent relatif latéralement depuis l'extérieur du véhicule automobile (1) vers les unités de refroidissement de moteur et/ou de groupe (5a, 5b, 5c) .

17. Véhicule automobile (1) selon l'une quelconque des revendications 4 à 16, **caractérisé en ce que** le caisson d'entrée d'air de refroidissement (6) est disposé dans la direction longitudinale du véhicule (L) derrière une aile de roue avant (K) et en dessous du niveau de la carrosserie de fourgon (4).

18. Véhicule automobile (1) selon l'une quelconque des revendications 4 à 17, **caractérisé en ce qu'**une protection contre les impacts latéraux s'étend latéralement à l'extérieur du dispositif de refroidissement de moteur et/ou de groupe (5) et du caisson d'entrée d'air de refroidissement (6).

19. Véhicule automobile (1) selon l'une quelconque des revendications précédentes, **caractérisé en ce qu'**un réservoir de carburant est disposé entre des longerons du châssis de véhicule (3) de telle sorte qu'aucun réservoir de carburant ne soit disposé du côté du châssis de véhicule sur lequel est disposé le dispositif de refroidissement de moteur et/ou de groupe (5).

20. Véhicule automobile (1) selon l'une quelconque des revendications précédentes, **caractérisé en ce qu'**au moins le dispositif de refroidissement de moteur et/ou de groupe (5) est pourvu d'un élément de protection (10) qui garantit un passage d'air mais qui protège contre une pénétration de particules parasites.

21. Véhicule automobile (1) selon l'une quelconque des revendications 4 à 20, **caractérisé en ce qu'**au moins le caisson d'entrée d'air de refroidissement (6) est pourvu d'un élément de protection (10) qui garantit un passage d'air mais qui protège contre une pénétration de particules parasites.
